# EUROPÄISCHE PATENTSCHRIFT

(11) **EP 1 422 995 B1**
(45) Veröffentlichungstag und Bekanntmachung des Hinweises auf die Patenterteilung: **24.05.2006**
(21) Anmeldenummer: 02798680.1
(22) Anmeldetag: 30.08.2002
(51) Int. Cl.: A01G 23/093

(54) **FAHRBARE, VORZUGSWEISE AN EINEM FAHRZEUG ANBRINGBARE VORRICHTUNG ZUM VOLLSTÄNDIGEN ENTFERNEN UND ZERKLEINERN VON IN REIHE WACHSENDER HÖLZER**
TRAVELING DEVICE, WHICH CAN BE PREFERABLY MOUNTED ON A VEHICLE, PROVIDED FOR COMPLETELY REMOVING AND REDUCING THE SIZE OF TREES GROWING IN A ROW
DISPOSITIF MOBILE POUVANT ETRE APPLIQUE DE PREFERENCE SUR UN VEHICULE, CONCU POUR RETIRER COMPLETEMENT ET FRACTIONNER DES ELEMENTS EN BOIS QUI POUSSENT EN LIGNE

(30) Priorität: 04.09.2001 DE 10143225
(43) Veröffentlichungstag der Anmeldung: 02.06.2004
(73) Patentinhaber: Jordan, Petra, 31535 Neustadt (DE)
(72) Erfinder: JORDAN, Ernst, 31535 Neustadt (DE)
(74) Vertreter: Thömen, Uwe
(86) Internationale Anmeldenummer: PCT/DE2002/003187
(87) Internationale Veröffentlichungsnummer: WO 2003/024197

(56) Entgegenhaltungen:
- DE-A- 3 128 466
- DE-A- 4 209 947
- DE-A- 4 416 195
- DE-B- 2 544 027
- DE-U- 29 917 330
- FR-A- 2 293 870
- US-A- 4 158 945
- US-A- 4 338 985
- US-A- 4 784 195

## Beschreibung

Die vorliegende Erfindung betrifft eine fahrbare, vorzugsweise an einem Fahrzeug anbringbare Vorrichtung zum vollständigen Entfernen und Zerkleinern von in Reihe wachsender Hölzer nach dem Oberbegriff des Anspruchs 1. Eine solche Vorrichtung ist z.B. aus FR 2 293 870 A bekannt.

Als Hölzer werden im Rahmen der vorliegenden Erfindung alle Bäume und Sträucher samt ihrer Wurzeln und Äste verstanden, deren Wurzeln nur relativ wenig im Boden verzweigt oder verankert sind. Es handelt sich also vorzugsweise um Niedrigstämme mit einer Höhe von etwa drei bis vier Metern.

Zu den in Reihe wachsenden Hölzern gehören insbesondere Obstbäume auf Obstplantagen. Es ist bekannt, dass die auf den Obstplantagen in Reihe gepflanzten Obstbäume nach einer bestimmten Zeit entfernt und durch neue junge Obstbäume ersetzt werden müssen, da das geerntete Obst nicht mehr den gestellten Anforderungen beispielsweise an Farbe, Form, Geschmack oder Haltbarkeit genügt. So werden Apfelbäume etwa alle zehn Jahre erneuert, da die geernteten Äpfel älterer Bäume nicht mehr eine sortentypische rote Farbe, sondern inzwischen eine gelbe Farbe aufweisen.

Für eine Neubepflanzung werden die alten Bäume bekanntlich von Hand mit einer Kettensäge oder dergleichen kurz über dem Boden abgesägt und ebenfalls von Hand seitlich neben den zunächst im Boden verbleibenden Baumstümpfen, den sogenannten Stubben, abgelegt. Die abgesägten Bäume werden anschließend wiederum von Hand einem Hacker zugeführt, der die abgesägten Bäume in kleine Holzschnitzel zerkleinert. Derartige Hacker sind seit Jahrzehnten im praktischen Einsatz und werden als Anbau-, Aufbau- oder Anhängeraggregate in unterschiedlichen Größen und Ausführungen gebaut. Je nach Art der Werkzeuge werden die Hacker als Scheiben-, Trommel- oder Schneckenhäcker bezeichnet. Die im Boden verbliebenen Stubben der alten Bäume werden noch in einem gesonderten Arbeitsgang mittels einer speziellen Stubbenfräse entfernt.

Nachteilig an diesem Verfahren zum Entfernen der alten Bäume ist, dass mehrere separate und vorwiegend von Hand auszuführende Arbeitschritte notwendig sind, um die alten Bäume samt Stubben zu entfernen. Diese zeitaufwendige, körperlich schwere und gefährliche Arbeit wird üblicherweise von mehreren Arbeitskräften durchgeführt und ist entsprechend kostenintensiv.

Es ist außerdem bekannt, die in Reihe wachsenden alten Bäume zunächst irgendwie umzudrücken und dann mittels eines Mulchgerätes zu überfahren, welches die alten Bäume samt ihren Stubben beim Überfahren zerkleinert und die dabei entstehenden Holzschnitzel in den Boden eindrückt. Die alten Bäume werden also nicht entfernt.

Das Mulchgerät umfasst dazu üblicherweise eine Fräse, welche den Baum samt Stubben zerstört und die entstehenden Holzschnitzel in den Boden eindrückt, wo diese verrotten.

Das Eindrücken der Holzschnitzel erfolgt auf einer Breite von etwa 20 cm. Die Fräsachse selbst ist aber bei den bekannten Mulchgeräten etwa 2,5 Meter breit, so dass der gesamte Boden über diese Breite gefräst und aufgeweicht wird. Dies hat den Nachteil, dass der gefräste Boden besonders leicht Regenwasser aufnimmt und dadurch nur noch schwer begehbar und bepflanzbar ist.

Nachteilig an einem derartigen Verfahren ist auch, dass die Verrottung der in den Boden eingedrückten Holzschnitzel zu einer Bodenübersäuerung führt, die sich negativ auf die Gesundheit der neu gepflanzten Bäume auswirkt.

Weiterhin hat sich als negativ herausgestellt, dass der Boden durch das Einarbeiten und Eindrücken der Holzschnitzel verdichtet wird. Der Boden kann dadurch nicht sofort wieder bepflanzt werden, sondern muss erst eine bestimmte Zeit ruhen, in der die in den Boden eingedrückten Holzschnitzel wenigstens teilweise verrotten können.

Dadurch, dass die Bäume nicht vollständig entfernt, sondern nur in den Boden eingearbeitet werden, bleibt außerdem bei möglicherweise kranken Bäumen das alte kranke Holz im Boden zurück und kann eine Infektionsquelle für die neu gepflanzten Bäume darstellen. Bekannt ist beispielsweise der sogenannte Feuerbrand, eine Bakterienkrankheit, die an Obstbäumen auftritt. Diese Krankheit stellt eine ernsthafte Bedrohung für den Obstbau dar. Durch das Einarbeiten der Holzschnitzel von mit dieser Krankheit befallenen Obstbäumen in den Boden werden die krankheitsauslösenden Bakterien nicht beseitigt, sondern können neu gepflanzte Bäume befallen.

Weiterhin sind verschiedene, überwiegend in der Forstwirtschaft zur Arbeitserleichterung und Kosteneinsparung eingesetzte Geräte zum Fällen von Bäumen und Zerkleinern ihrer Äste und Wipfel bekannt, die sich aber nicht zum vollständigen Entfernen und Zerkleinern von in Reihe wachsenden Hölzern wie Obstbäumen oder -sträuchern eignen.

Aus der DE 44 16 195 A1 ist zunächst ein Verfahren und eine fahrbare Maschine zum Fällen und Verarbeiten von Bäumen bekannt. Bei diesem Verfahren wird ein zu fällender Baum mittels eines von einem Kran getragenen Arbeitskopfes (Harvester) abgesägt, entastet, entwipfelt und zu Stammabschnitten abgelängt. Mindestens beim Entwipfeln wird der Baum mittels des Arbeitskopfes in eine waagerechte Lage gekippt und so gehalten, dass der Wipfel in den Einzug einer Zerkleinerungsmaschine eingeschoben wird, so dass zumindest der Wipfel in die Zerkleinerungsvorrichtung gelangt und darin zerkleinert wird. Das dabei verwendete Fahrzeug trägt einen schwenkbar gelagerten Kran mit einem Arbeitskopf, eine Zerkleinerungsvorrichtung mit Einzug und wahlweise einen auf dem Fahrzeug angeordneten oder an diesem angehängten Behälter, in den das Zerkleinerungsgut aus der Zerkleinerungsvorrichtung mittels eines Förderers transportiert wird.

Mit diesem Fahrzeug werden die bisher getrennt durchgeführten Arbeitsgänge wie Fällen, Entasten und Ablängen von Bäumen und die Verwertung des dabei anfallenden Abfallholzes zusammengefasst. Das Zerkleinerungsgut wird in einem Behälter gesammelt und der weiteren Verwertung, beispielsweise der Verbrennung in Heizkraftwerken, zugeführt. Vorteilhaft werden hier die Äste und Wipfel gefällter Bäume, die bisher im Wald zurückgelassen wurden, als Energiequelle genutzt. Vorteilhaft wird dadurch außerdem einer Übersäuerung des Waldbodens durch übermäßige Mengen von verrottenden Baumabfällen vorgebeugt. Mit der Durchführung der Verfahrensschritte durch eine einzige fahrbare Maschine kann Material, Zeit und Arbeitskraft gespart werden.

Aus der DE 299 17 330 U1 ist weiterhin eine Vorrichtung zur Aufnahme von im Schwad liegenden Hölzern bekannt. Es handelt sich hierbei um eine an einen Feldhäcksler als Vorbaueinheit anbaubare Kombination eines Schnitzelwerks mit einer Aufnahmeeinrichtung, die aus einer quer zur Fahrtrichtung angeordneten Mehrzahl von Aufnahme- und Zuführwalzen besteht.

Als Schwad wird hierbei eine neben den bleibenden Stümpfen liegende breite Ablage von gefällten Holz bezeichnet.

Durch die Vorrichtung ist ein kontinuierlicher Arbeitsablauf durch einfaches Überfahren des Schwads möglich. Dabei wird der Schwad über eine erste Aufnahmewalze, die mit Aufnahmedornen ausgebildet ist, vom Boden aufgenommen und über eine Mehrzahl von transportunterstützenden Zuführwalzen, die in einer Reihe nach der ersten Aufnahmewalze angeordnet sind, zur Schnitzeleinrichtung geleitet. Die Zuführwalzen sind mit transportunterstützenden Erhebungen (Mitnehmern) in Form von achsparallelen Kanten versehen. Die Holzschnitzel des zerkleinerten Schwads werden über eine Ableiteinrichtung wieder auf die Fläche gebracht oder in einen nebenlaufenden oder geschleppten Anhänger befördert, damit die Holzschnitzel einer weiteren wirtschaftlichen Nutzung, entweder als Brennmaterial oder auch als Dünger zugeführt werden.

Aus der DE 42 09 947 A1 ist schließlich noch ein Mähhacker für Gehölze bekannt, der in Reihen stehende Stämme abschneidet und zerkleinert. Solche Geräte werden üblicherweise an einen Traktor oder dergleichen angebaut und bestehen aus einem Mähorgan, Förderelementen für,die abgeschnittenen Bäume oder dünneren Gehölze, einer Zerkleinerungseinrichtung und einem Auswurforgan für das zerkleinerte Material.

Der Mähhacker umfasst einen vertikalen Rotor mit einer Sägescheibe zum bodennahen Abtrennen der Stämme und mit einer darüber liegenden vertikal rotierenden Schnecke, die das einfließende Gehölz erfasst und nahezu im senkrechten Fluss den Hackscheiben zuführt, die zwischen Sägescheibe und Schnecke angeordnet sind. Das zerkleinerte Material wird seitlich in eine Förderleitung ausgeworfen.

Alle vorausgehend beschriebenen Verfahren und Vorrichtungen haben sich jedoch in der Praxis als nicht geeignet erwiesen, die in Reihe wachsenden Hölzer in wirtschaftlicher Weise vollständig zu entfernen und zu zerkleinern. In allen Fällen ist ein aufwendiges nachträgliches Entfernen des im Boden verbliebenen Baumstumpfes erforderlich.

Ausgehend von diesem Stand der Technik liegt der Erfindung die Aufgabe zugrunde, eine fahrbare, vorzugsweise an einem Fahrzeug anbringbare Vorrichtung anzugeben, die in einem kontinuierlichen Arbeitsablauf in Reihe wachsende Hölzer, insbesondere Obstbäume, vollständig entfernt und zerkleinert.

Diese Aufgabe wird bei einer fahrbaren, vorzugsweise an einem Fahrzeug anbringbaren Vorrichtung nach dem Oberbegriff des Anspruchs 1 durch die kennzeichnenden Merkmale des Anspruchs 1 gelöst. Weiterbildungen und vorteilhafte Ausgestaltungen der Erfindung ergeben sich aus den Unteransprüchen.

Die fahrbare, vorzugsweise an einem Fahrzeug anbringbare Vorrichtung umfasst ein Schneidwerkzeug zum Zerkleinern der zugeführten Hölzer, einen am Schneidwerkzeug angeordneten Auswerfer zum Auswerfen der im Schneidwerkzeug zerkleinerten Hölzer sowie eine in Fahrtrichtung vor dem Schneidwerkzeug angeordnete Zuführvorrichtung zum Zuführen der zu zerkleinernden Hölzer in das Schneidwerkzeug.

Erfindungsgemäß zeichnet sich die Vorrichtung dadurch aus, dass die Zuführvorrichtung zwei angetriebene, senkrecht und bodennah angeordnete sowie einen Spalt bildende Einzugswalzen umfasst, die beim Verfahren der Vorrichtung die zuvor in Fahrtrichtung niedergedrückten Hölzer erfassen, im Spalt einklemmen und in Richtung Schneidwerkzeug drücken. Zusätzlich umfasst die Zuführvorrichtung wenigstens eine angetriebene, quer zur Fahrtrichtung überwiegend im Boden angeordnete Rodungswalze, welche beim Verfahren der Vorrichtung die im Boden liegenden Wurzeln der niedergedrückten Hölzer erfasst und derart nach oben drückt, dass sie dem Schneidwerkzeug zuführbar sind.

Durch die erfindungsgemäße Vorrichtung ist es möglich, die in Reihe wachsenden Hölzer zusammen mit ihren Ästen und Wurzeln auf einfache Weise in nur einem Arbeitsgang und in einem kontinuierlichen Arbeitsablauf zu entfernen und zu zerkleinern.

Dazu wird die Vorrichtung beispielsweise an einen in Reihe stehenden und irgendwie in Fahrtrichtung niedergedrückten Baum herangefahren, wobei sich die Vorrichtung selbst in einer Reihe mit den Bäumen befindet. Beim kontinuierlichen Verfahren der Vorrichtung wird der niedergedrückte Baum von den beiden rotierenden Einzugswalzen erfasst und durch die Drehrichtung der beiden Einzugswalzen zum von den Einzugswalzen gebildeten Spalt ausgerichtet. Beim weiteren Verfahren der Vorrichtung wird der Baum in dem Spalt eingeklemmt und in Richtung des Schneidwerkzeugs gedrückt.

Durch den Einsatz wenigstens einer quer zur Fahrtrichtung im Boden angeordneten und rotierenden Rodungswalze wird nun erreicht, dass der niedergedrückte Baum, der wenigstens teilweise noch mit seinen Wurzeln im Boden verankert ist, an der Wurzel erfasst und nach oben gedrückt wird.

Die Einzugswalzen drücken den Baum samt Wurzel dann weiter in Richtung des Schneidwerkzeugs, wo dieser - an der Wurzel beginnend - in an sich bekannter Weise zerkleinert wird, und das zerkleinerte Baummaterial über einen Auswerfer beispielsweise in einem Behälter aufgefangen wird. Das aufgefangene zerkleinerte Baummaterial kann als Brennstoff an Heizkraftwerke veräußert oder als Düngemittel eingesetzt werden.

Für ein Funktionieren der erfindungsgemäßen Vorrichtung dürfen die Wurzeln der zu entfernenden Hölzer nicht zu tief im Boden verankert sein.

Insbesondere die Stubben der in Reihe gepflanzten Obstbäume auf Obstplantagen weisen nur gering verzweigte und damit wenig im Boden verankerte Wurzeln auf. Dies ist darauf zurückzuführen, dass es sich bei diesen Bäumen um Niedrigstämme handelt, die nur etwa drei bis vier Meter hoch sind.

Durch das vollständige Entfernen der in Reihe gepflanzten Hölzer können vorteilhaft sofort neue junge Bäume oder Sträucher gepflanzt werden, da keine Rückstände im Boden verbleiben und keine Bodenverdichtung erfolgt.

Durch die erfindungsgemäße Vorrichtung können außerdem kranke Bäume besonders leicht und vollständig entfernt werden, so dass das befallene Baummaterial keine weitere Infektionsquelle für benachbarte und noch gesunde Bäume darstellt. Insbesondere lassen sich dadurch die auf Obstbaumplantagen auftretenden Bakterienerkrankungen der Obstbäume wie der Feuerbrand schnell und einfach eindämmen. Es bleibt kein mit Krankheitserregern befallenes Holz im Boden zurück.

Der Einsatz einer fahrbaren Vorrichtung, mit der in einem schnellen und kontinuierlichen Arbeitsablauf Hölzer in einem Arbeitsgang vollständig entfernt und zerkleinert werden, führt zu einer allgemeinen Kostenreduzierung.

Insbesondere wird auch die auf Obstplantagen sonst sehr gefährliche und körperlich schwere Arbeit bei der Rodung der Niedrigstämme erleichtert.

In einer zweckmäßigen Ausgestaltung der Erfindung sind die beiden Einzugswalzen zylindrisch ausgebildet und parallel zueinander angeordnet. Zwischen sich bilden die beiden Einzugswalzen dabei einen Spalt mit konstanter Breite.

In einer bevorzugten Ausführungsform der Erfindung ist vorgesehen, dass die Einzugswalzen alternativ kegelförmig ausgebildet sind, wobei die Längsachsen der Einzugswalzen parallel zueinander angeordnet sind. Wegen der kegelförmigen Ausgestaltung bilden die Einzugswalzen einen Spalt, dessen Breite am unteren Ende größer ist als am oberen Ende.

Diese Anordnung hat den Vorteil, dass sich die Walzen nicht so stark voneinander entfernen müssen, wenn der Stubben des Baumes mit den Wurzel erfasst wird, weil der Spalt am unteren Ende breiter ist und der Stubben diesen Bereich einfacher passieren kann. Im Vergleich zu den zylindrischen Walzen brauchen die kegelförmigen Walzen deshalb nicht so häufig auf- und zuzumachen. Sie werden also nicht so häufig voneinander weg bewegt und aufeinander zu bewegt. Im übrigen sind die Walzen so montiert, dass sie sich auf einfache Weise auswechseln lassen und dass man bei Bedarf die kegelförmigen Walzen durch zylindrische Walzen ersetzen kann und umgekehrt.

Eine Weiterbildung der Erfindung sieht vor, dass die Rodungswalze in Fahrtrichtung hinter den Einzugswalzen angeordnet ist.

Dadurch wird erreicht, dass beispielsweise ein Baum zunächst von den Einzugswalzen erfasst, eingeklemmt und in Richtung des Schneidwerkzeugs gedrückt wird, wobei die im Boden wenigstens teilweise verankerte Wurzel des Baumes einen Widerstand bildet. Beim weiteren Verfahren der Vorrichtung drückt aber die im Boden rotierende Rodungswalze die Wurzel des Baumes aus dem Boden, so dass der Widerstand aufgehoben und der Baum samt Wurzel und Ästen dem Schneidwerkzeug zuführbar ist.

Eine in Fahrtrichtung vor den Einzugswal.zen angeordnete und im Boden rotierende Walze löst die gestellte Aufgabe zwar auch, es hat sich aber herausgestellt, dass sich die Äste eines von den Einzugswalzen erfassten Baumes teilweise an der Halterung der Rodungswalze verklemmen können und dann einen Widerstand beim Einzug bilden.

Damit die Rodungswalze die Wurzel des zu entfernenden Baumes oder Strauches sicher erfasst und nach oben aus dem Erdboden drückt, weist die Rodungswalze vorzugsweise radial nach außen gerichtete Stacheln auf. Bevorzugt ist die Rodungswalze derart angeordnet, das sie etwa 12 cm tief im Boden rotiert.

Eine Weiterbildung der Erfindung sieht vor, dass die fahrbare, vorzugsweise an einem Fahrzeug anbringbare Vorrichtung und/oder das Fahrzeug, an dem die Vorrichtung anbringbar ist, jeweils allein oder in Verbindung miteinander, Mittel zum Niederdrücken der Hölzer umfassen, welche beim Verfahren der Vorrichtung die im wesentlichen senkrecht wachsenden Hölzer in eine möglichst waagerechte Position am Boden drücken, wobei die Wurzeln teilweise aus dem Boden hervortreten.

Dadurch wird das Niederdrücken von zu entfernenden Hölzern, insbesondere von Obstbäumen, und das eigentliche Entfernen der Hölzer aus dem Boden sowie das Zerkleinern der Hölzer in einem Arbeitsgang und einem kontinuierlichen Arbeitsablauf erreicht.

Vorzugsweise handelt es sich bei dem Mittel um einen hydraulisch bewegbaren Trägerarm, an dessen in Fahrtrichtung vorderem Ende eine Niederdrückrolle angeordnet ist. Die Niederdrückrolle wird beim Verfahren der Vorrichtung auf den Stamm des zu entfernenden Baumes gebracht. Durch das Verfahren der Vorrichtung wird der Baum im Zusammenspiel mit dem in der Senkrechten von oben nach unten und umgekehrt bewegbaren Trägerarm niedergedrückt.

In einer vorteilhaften Ausgestaltung der Erfindung ist vorgesehen, dass die Einzugswalzen radial nach außen gerichtete Stacheln aufweisen. Dadurch wird erreicht, dass die Einzugswalzen die zu entfernenden Hölzer leicht erfassen und auch gegen einen möglichen Widerstand in Richtung des Schneidwerkzeugs drücken können. Dadurch, dass sich die Stacheln teilweise in den Stamm eines Baumes bohren oder Äste hintergreifen, wird der zu entfernenden Baum besonders leicht in den von den Einzugswalzen gebildeten Spalt gedrückt, eingeklemmt und zum Schneidwerkzeug weiterbefördert.

Weiterhin ist vorgesehen, dass eine der Einzugswalzen ortsfest angeordnet ist und die andere Einzugswalze entgegen einer auf die ortsfest angeordnete Einszugswalze gerichteten Kraft derart schwenkbar angeordnet ist, dass die Breite des durch die beiden Einzugswalzen gebildeten Spaltes veränderbar ist, und die erfassten Hölzer zwischen den beiden Einzugswalzen eingeklemmt sind. Durch wird erreicht, dass die Hölzer trotz unterschiedlichen Durchmessers jederzeit zwischen den Einzugswalzen eingeklemmt und in Richtung des Schneidwerkzeugs gedrückt werden. Besitzt beispielsweise ein von den Einzugswalzen erfasster Baum einen Durchmesser, der größer als die vorgegebene Spaltbreite ist, so drückt der Baum beim Eintritt in den Spalt die schwenkbar angeordnete Einzugswalze entgegen einer vorgegebene Kraft nach außen, also von der ortsfest angeordneten Einzugswalze weg. Die Spaltbreite passt sich dabei dem Durchmesser des Baumstammes oder des verdichteten Baumes angepasst, so dass der Baum jederzeit von den Einzugswalzen eingeklemmt, verdichtet und in Richtung des Schneidwerkzeugs gedrückt wird.

Vorzugsweise ist die schwenkbare Einzugswalze dazu hydraulisch bewegbar.

In einer Weiterbildung ist-die Drehrichtung der angetriebenen Einzugswalzen umkehrbar. Dadurch kann ein teilweise eingezogener, aber irgendwie verklemmter Baum oder Strauch durch Umkehr der Drehrichtung wieder aus dem Spalt der Einzugswalzen herausgedrückt werden. Durch erneute Umkehr der Drehrichtung kann der Baum oder Strauch dann erneut dem Schneidwerkzeug zugeführt werden.

Eine vorteilhafte Ausgestaltung der Erfindung sieht vor, dass die Zuführvorrichtung wenigstens eine, vorzugsweise drei angetriebene, quer zur Fahrtrichtung angeordnete Förderwalzen zum Fördern der durch die Rodungswalze aus dem Boden gehobenen und durch die Einzugswalzen in Richtung des Schneidwerks gedrückten Hölzer umfasst, wobei die Förderwalzen in Fahrtrichtung hinter der Rodungswalze angeordnet sind.

Vorzugsweise sind die Förderwalzen derart angeordnet, dass die Hölzer, wenn sie von der Rodungswalze an der Wurzel erfasst werden, direkt auf die Förderwalzen übergeben und zum Schneidwerkzeug transportiert werden.

Besonders bevorzugt sind die Förderwalzen stufenförmig angeordnet, beginnend am Boden in nächster Nähe zur Rodungswalze und endend am Schneidwerkzeug.

Eine Weiterbildung sieht vor, dass wenigstens zwischen zwei der quer in Fahrtrichtung angeordneten Walzen eine Aussparung vorgesehen ist. Dadurch wird erreicht, dass zufällig von der Rodungswalze mitgenommene Steine durch die Aussparung wieder zu Boden fallen können und nicht in das Schneidwerkzeug eingebracht werden.

Es ist vorgesehen, dass die Vorrichtung selbstfahrend oder durch ein Fahrzeug wie einen Traktor oder dergleichen bewegbar ist.

Die vom Auswerfer ausgeblasenen zerkleinerten Hölzer samt ihrer Wurzeln sind vorzugsweise in einem Behälter zur Weiterverwendung überführbar. Insbesondere können die Holzschnitzel als Brennmaterial an Heizkraftwerke verkauft werden, wobei der daraus erzielte Gewinn die Arbeitskosten senkt. Außerdem lassen sich die Holzschnitzel der zerkleinerten Hölzer als Düngemittel einsetzen.

Nachfolgend wird die Erfindung anhand eines Ausführungsbeispiels erläutert, das in der Zeichnung dargestellt ist. In dieser zeigen:
- Fig. 1: eine schematische, perspektivische Ansicht einer an einem Fahrzeug angehängten erfindungsgemäßen Vorrichtung,
- Fig. 2: eine schematische Seitenansicht der Zuführvorrichtung der erfindungsgemäßen Vorrichtung und
- Fig. 3: eine schematische Draufsicht auf die Zuführvorrichtung der erfindungsgemäßen Vorrichtung und
- Fig. 4: eine vereinfachte Darstellung von zwei kegelförmigen Einzugswalzen.

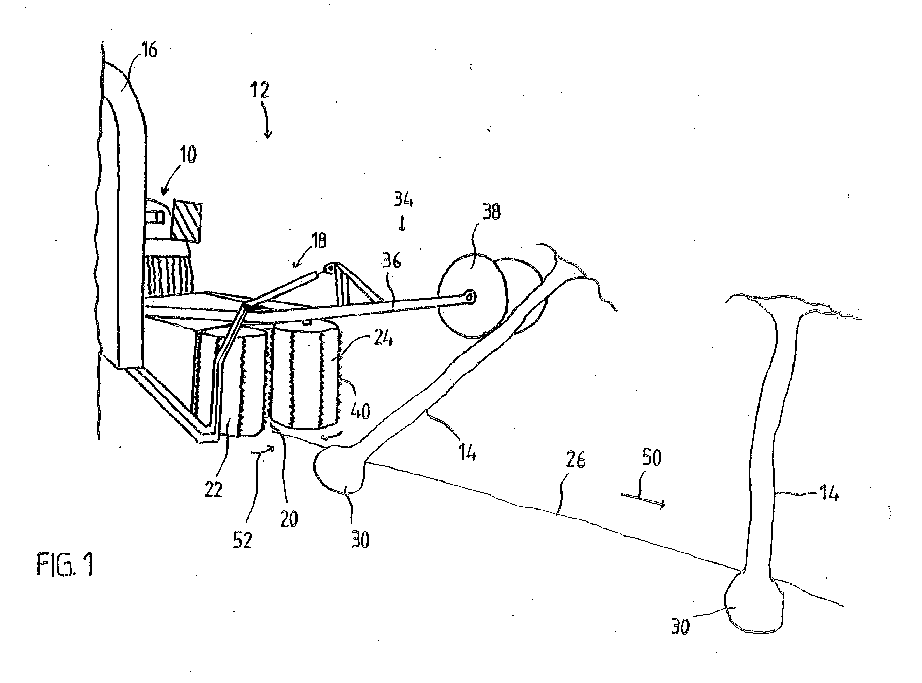

In Fig. 1 ist eine erfindungsgemäße Vorrichtung 12 dargestellt, die an einem hier nur teilweise dargestellten Fahrzeug 10, beispielsweise einem Traktor, angehängt ist.

Die Vorrichtung 12 umfasst ein hier nicht dargestelltes Schneidwerkzeug zum Zerkleinern zugeführter Hölzer 14, einen am Schneidwerkzeug angeordneten Auswerfer 16 zum Auswerfen der im Schneidwerkzeug zerkleinerten Hölzer 14 und eine in Fahrtrichtung vor dem Schneidwerkzeug angeordnete Zuführvorrichtung 18 zum Zuführen der zu zerkleinernden Hölzer 14 in das Schneidwerkzeug. Die Vorrichtung 12 ist durch das Fahrzeug 10 verfahrbar. Die Fahrtrichtung des Fahrzeugs 10 und mithin der Vorrichtung 12 ist mittels eines Pfeils 50 angegeben.

Die Zuführvorrichtung 18 umfasst zwei senkrecht, bodennah angeordnete Einzugswalzen 22 und 24, zwischen denen sich ein Spalt 20 befindet. Die Einzugswalzen 22 und 24 weisen radial nach außen gerichtete Stacheln 40 auf, die einen niedergedrückten Baum 14 ergreifen und in Richtung des hier nicht dargestellten Schneidwerkzeugs drücken. Dabei können die Stacheln 40 besonders leicht den Stamm eines Baumes 14 erfassen oder die Astgabeln eines Baumes 14 hintergreifen. Die eine Einzugswalze 22 ist ortsfest angeordnet, während die andere Einzugswalze 24 entgegen einer auf die ortsfest angeordnete Einzugswalze 22 gerichteten Kraft derart hydraulisch schwenkbar angeordnet ist, dass die Breite des durch die beiden Einzugswalzen 22 und 24 gebildeten Spaltes 20 veränderbar ist. Dies ist dann sinnvoll, wenn Bäume 14 unterschiedlichen Durchmessers entfernt werden sollen. Die Breite des Spaltes 20 passt sich in diesem Fall automatisch dem Durchmesser des Baumes 14 an.

Die Einzugswalzen 22 und 24 werden hydraulisch angetrieben, wobei die Drehrichtung der Einzugswalzen 22 und 24 derart ist, dass die Hölzer 14 beim Verfahren der Vorrichtung 12 in den Spalt 20 gezogen werden. Die Drehrichtung der Einzugswalzen 22 und 24 während des Verfahrens der Vorrichtung 12 in Fahrtrichtung 50 ist in Fig. 1 mittels zweier weiterer Pfeile 52 dargestellt. Sollte sich ein eingezogener Baum 14 im Spalt 20 derart verklemmen, das eine Weiterbeförderung des Baumes 14 nicht möglich ist, lässt sich die Drehrichtung 52 der angetriebenen Einzugswalzen 22 und 24 umkehren, und der eingezogene Baum 14 kann in Fahrtrichtung 50 aus dem Spalt 20 gedrückt werden.

Die Vorrichtung 12 umfasst außerdem ein Mittel 34 zum Niederdrücken der zu zerkleinernden Bäume 14. Das Mittel 34 besteht aus einem hydraulisch bewegbaren Trägerarm 36 und einer daran befestigten Niederdrückrolle 38.

Erfindungsgemäß umfasst die Zuführvorrichtung 18 außerdem eine quer zur Fahrtrichtung 50 im Boden angeordnete, hier nicht dargestellte Rodungswalze. Die Rodungswalze wird derart hydraulisch angetrieben, dass sie die im Boden 26 befindlichen Wurzeln 30 der niedergedrückten Hölzer 14 erfasst und nach oben drückt.

Zum Entfernen und Zerkleinern der in Fig. 1 dargestellten Bäume 14 wird die an einem Fahrzeug 10 angehängte Vorrichtung 12 mittels des Fahrzeugs 10 an einen ersten Baum 14 herangefahren. Dabei befindet sich die Vorrichtung 12 in einer Reihe mit den in Reihe wachsenden Bäumen 14. Beim Verfahren der Vorrichtung 12 wird der Trägerarm 36 derart hydraulisch in der Senkrechten bewegt, dass die Niederdrückrolle 38 am Stamm des zu entfernenden Baumes 14 anliegt. Beim weiteren Verfahren der Vorrichtung 12 wird der Baum 14 in Fahrtrichtung 50 niedergedrückt. Dazu kann der Trägerarm 36 unterstützend nach unten geführt werden.

Die Vorrichtung 12 wird nun kontinuierlich weiter in Fahrtrichtung 50 verfahren. Die Einzugswalzen 22 und 24 erfassen daraufhin den unteren Stamm des Baumes 14, wobei die Stacheln 40 der Einzugswalzen 22 und 24 den Stamm des Baumes 14 ergreifen und den gesamten Baum 14 in den Spalt 20 führen und ausrichten.

Dadurch, dass der Baum 14 noch mit seiner Wurzel 30 zumindest teilweise im Boden 26 verankert ist, wird er nicht sofort mittels der Einzugswalzen 22 und 24 in Richtung des Schneidwerkzeugs gedrückt. Erst wenn die Wurzel 30 des-Baumes 14 beim weiteren Verfahren der Vorrichtung 12 von der hinter den Einzugswalzen 22 und 24 angeordneten, im Boden 26 rotierenden Rodungswalze 28 erfasst und aus dem Boden 26 gedrückt wird, lässt sich der gesamte Baum 14 mit seiner Wurzel 30 in das Schneidwerkzeug drücken. Dabei klemmen die Einzugswalzen 22 und 24 den Baum 14 zusammen mit den am Baum 14 befindlichen Ästen ein, das diese zwangsweise in den Spalt 20 gezogen und in Richtung des Schneidwerkzeugs gedrückt werden.

In dem Schneidwerkzeug wird der gesamte Baum 14 samt Wurzel 30 zerkleinert und mittels eines Auswerfers 16 in einen hier nicht dargestellten Behälter zur weiteren Verwendung überführt.

Die gesammelten zerkleinerten Bäume können an Heizkraftwerke verkauft werden. Dadurch reduzieren sich die Arbeitskosten für das Entfernen der in Reihe gepflanzten Bäume 14. Im Vergleich zum Stand der Technik, bei dem die Bäume 14 mittels eines Mulchgerätes in den Boden eingearbeitet werden, lassen sich also nochmals die Kosten senken.

Mit der erfindungsgemäßen Vorrichtung wird im Vergleich zu herkömmlichen Geräten mindestens die.doppelte Fläche pro Tag bearbeitet, bei weniger als die Hälfte der Kosten.

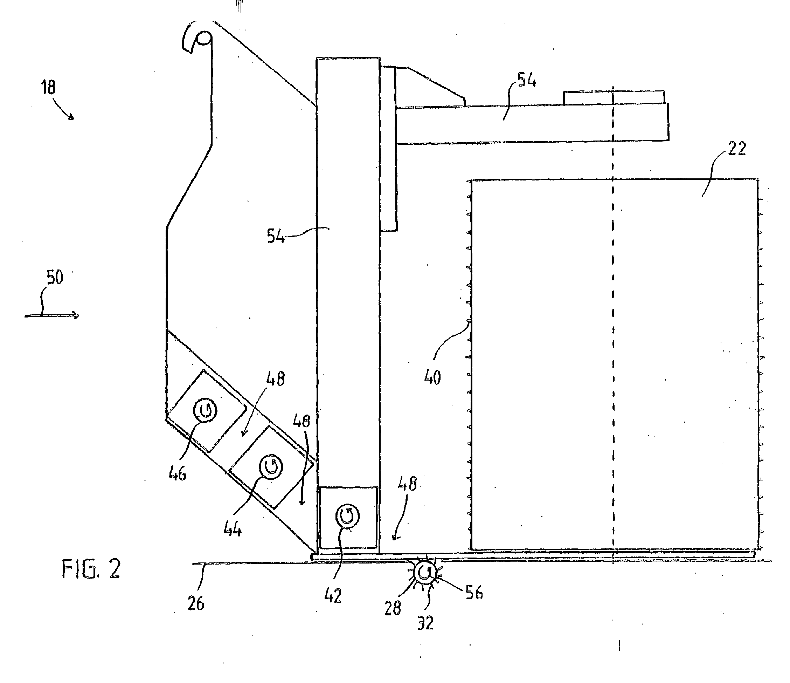

Fig. 2 zeigt eine schematische Seitenansicht der Zuführvorrichtung 18.

Eine derartige Zuführvorrichtung 18 ist in Fahrtrichtung 50 vor dem Schneidwerkzeug angeordnet. Die Zuführvorrichtung 18 dient zum Zuführen der zu zerkleinernden Hölzer in das Schneidwerkzeug.

Die Zuführvorrichtung 18 umfasst zwei senkrecht, dicht über dem Boden 26 angeordnete Einzugswalzen 22 und 24, von denen in Fig. 2 aber lediglich eine Einzugswalze 22 dargestellt ist. Die Einzugswalze 22 wird hydraulisch angetrieben und besitzt radial nach außen gerichtete Stacheln 40.

Außerdem umfasst die Zuführvorrichtung 18 eine ebenfalls hydraulisch angetriebene, quer zur Fahrtrichtung 50 im Boden 26 angeordnete Rodungswalze 28, welche in Fahrtrichtung hinter der Einzugswalze 22 angeordnet ist. Die Drehrichtung der rotierenden Rodungswalze 28 ist mit einem Pfeil 56 angegeben.

Die Rodungswalze 28 weist radial nach außen gerichtete Stacheln 32 auf, die beim Verfahren der Vorrichtung 12 die im Boden 26 liegenden Wurzeln der niedergedrückten Hölzer erfassen und nach oben drücken, wobei sich die Rodungswalze 28 etwa 12 cm tief im Boden 26 bewegt.

Die Zuführvorrichtung 18 umfasst drei weitere hydraulisch angetriebene, quer zur Fahrtrichtung angeordnete Förderwalzen 42, 44, und 46 zum Fördern der durch die Rodungswalze 28 aus dem Boden 26 gehobenen und in Richtung des Schneidwerks gedrückten Hölzer 14. Die Förderwalzen 42, 44 und 46 sind in Fahrtrichtung 50 stufenförmig hinter der Rodungswalze 28 angeordnet und weisen dieselbe Drehrichtung 56 wie die Rodungswalze 28 auf.

Die von der Rodungswalze 28 an der Wurzel aus dem Boden gedrückten Hölzer werden von der Rodungswalze 28 an die Förderwalzen 42, 44 und 46 übergeben und weiter zum Schneidwerkzeug transportiert. Zwischen den quer in Fahrtrichtung 50 angeordneten Walzen 28, 42, 44 und 46 sind Aussparungen 48 vorgesehen, durch die Steine, welche mit der Wurzel aus dem Boden gefördert werden, vor Erreichen des Schneidwerkzeugs wieder auf den Boden 26 fallen können.

Sämtliche Walzen 22, 28, 42, 44 und 46 sind in einem Rahmen 54 gelagert.

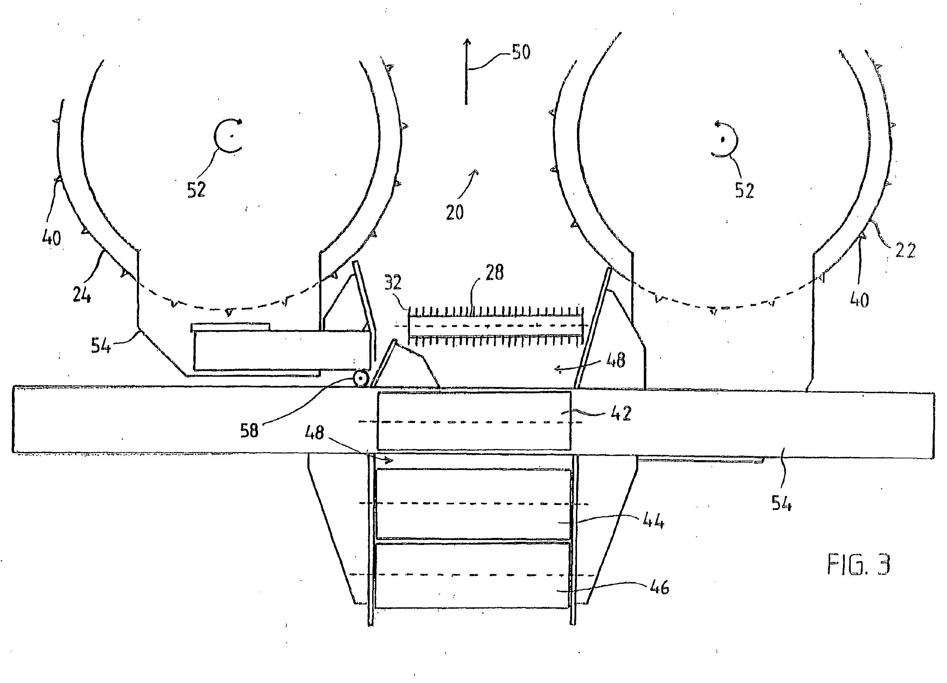

Fig. 3 zeigt eine schematische Draufsicht auf die Zuführvorrichtung 18.

Die Zuführvorrichtung 18 umfasst zwei senkrecht angeordnete und einen Spalt 20 bildende Einzugswalzen 22 und 24. Die Einzugswalzen 22 und 24 weisen radial nach außen gerichtete Stacheln 40 auf.

Während eine Einzugswalze 22 ortfest an einem Rahmen 54 angeordnet ist, lässt sich die andere Einzugswalze 24 am Drehpunkt 58 entgegen einer auf die ortsfest angeordnete Einzugswalze gerichteten Kraft derart hydraulisch schwenken, dass sich die Breite des durch die beiden Einzugswalzen 22 ünd 24 gebildeten Spaltes 20 verändert. Besitzt beispielsweise ein von den Einzugswalzen 22 und 24 erfasster Baum einen Durchmesser, der größer als die vorgegebene Spaltbreite ist, so drückt der Baum beim Eintritt in den Spalt 20 die schwenkbar angeordnete Einzugswalze 24 entgegen einer vorgegebene Kraft nach außen, also von der ortsfest angeordneten Einzugswalze 22 weg. Die Spaltbreite wird dabei dem Durchmesser des Baumstammes oder des verdichteten Baumes angepasst, so dass der Baum jederzeit von den Einzugswalzen 22 und 24 eingeklemmt, verdichtet und in Richtung des Schneidwerkzeugs gedrückt wird.

Die Drehrichtung der angetriebenen Einzugswalzen 22 und 24 ist in Fig. 3 mittels der Pfeile 52 angegeben.

Die Zuführvorrichtung 18 umfasst außerdem die bereits in Fig: 2 beschriebene Rodungswalze 28 mit radial nach außen weisenden Stacheln 32 und die drei Walzen 42, 44 und 46 zum Fördern der zu zerkleinernden Hölzer in das Schneidwerkzeug.

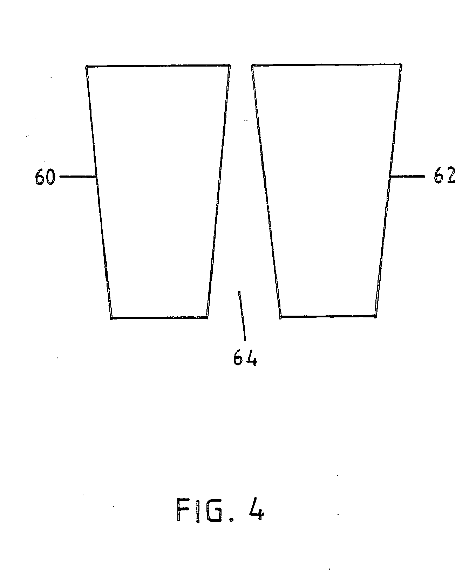

Fig. 4 zeigt in einer vereinfachten Darstellung zwei Einzugswalzen 60, 62, die anders als in Fig. 1 dargestellt, nicht zylindrisch, sondern kegelförmig ausgebildet sind. Die Kegelform ist derart, dass die Walzen am oberen Ende einen größeren Durchmesser als am unteren Ende haben.

Durch die kegelförmige Ausgestaltung der beiden Einzugswalzen 60, 62 wird ein Spalt 64 gebildet, dessen Breite am unteren Ende größer als am oberen Ende ist. Ein günstiger Wert für die Spaltbreite am unteren Ende liegt bei 30 - 40 cm.

Wenn man berücksichtigt, dass der Stubben mit den Wurzeln 30 der in Betracht kommenden Bäume 14 etwa 30 - 35 cm dicker als der Stamm der Bäume 14 ist, wird durch die kegelförmigen Einzugswalzen 60, 62 mit dem am unteren Ende verbreiterten Spalt 64 erreicht, dass die Stubben mit den Wurzeln 30 leichter erfasst werden können. Die beiden Einzugswalzen 60, 62 müssen also nicht so weit auseinandergedrückt werden wie dies bei den zylindrischen Einzugswalzen 22, 24 gemäß Fig. 1 der Fall wäre, wo die Breite des Spaltes 20 geringer ist.

## Patentansprüche

1. Fahrbare, vorzugsweise an einem Fahrzeug (10) anbringbare Vorrichtung (12) zum vollständigen Entfernen und Zerkleinern von in Reihe wachsender Hölzer (14), insbesondere von Obstbäumen, mit einem Schneidwerkzeug zum Zerkleinern der zugeführten Hölzer (14), einem am Schneidwerkzeug angeordneten Auswerfer (16) zum Auswerfen der im Schneidwerkzeug zerkleinerten Hölzer (14) und einer in Fahrtrichtung (50) vor dem Schneidwerkzeug angeordneten Zuführvorrichtung (18) zum Zuführen der zu zerkleinernden Hölzer (14) in das Schneidwerkzeug, wobei die Zuführvorrichtung (18) zwei angetriebene, senkrecht und bodennah angeordnete sowie einen Spalt (20) bildende Einzugswalzen (22, 24; 60, 62) umfasst **dadurch gekennzeichnet, dass**, die Einzugswalzen (22,24;60,62) beim Verfahren der Vorrichtung (12) die zuvor in Fahrtrichtung (50) niedergedrückten Hölzer (14) erfassen, im Spalt (20) einklemmen und in Richtung Schneidwerkzeug drücken, und dass die Zuführvorrichtung (18) wenigstens eine angetriebene, quer zur Fahrtrichtung (50) im Boden (26) angeordnete Rodungswalze (28) umfasst, welche beim Verfahren der Vorrichtung (12) die im Boden (26) liegenden Wurzeln (30) der niedergedrückten Hölzer (14) erfasst und derart nach oben drückt, dass sie dem Schneidwerkzeug zuführbar sind.

2. Fahrbare und an einem Fahrzeug (10) anbringbare Vorrichtung (12) nach Anspruch 1, **dadurch gekennzeichnet, dass** die Einzugswalzen (22, 24) zylindrisch ausgebildet und parallel zueinander angeordnet sind und einen Spalt (20) konstanter Breite bilden.

3. Fahrbare und an einem Fahrzeug (10) anbringbare Vorrichtung (12) nach Anspruch 1, **dadurch gekennzeichnet, dass** die Einzugswalzen (60, 62) kegelförmig ausgebildet sind, dass die Längsachsen der Einzugswalzen (60, 62) parallel zueinander angeordnet sind, und dass die kegelförmigen Einzugswalzen (60, 62) einen Spalt (64) bilden, dessen Breite am unteren Ende größer als am oberen Ende ist.

4. Fahrbare und an einem Fahrzeug (10) anbringbare Vorrichtung (12) nach einem der Ansprüche 1 bis 3, **dadurch gekennzeichnet, dass** die Rodungswalze (28) in Fahrtrichtung (50) hinter den Einzugswalzen (22, 24) angeordnet ist.

5. Fahrbare und an einem Fahrzeug (10) anbringbare Vorrichtung (12) nach einem der Ansprüche 1 bis 4, **dadurch gekennzeichnet, dass** die Rodungswalze (28) radial nach außen gerichtete Stacheln (32) aufweist.

6. Fahrbare und an einem Fahrzeug (10) anbringbare Vorrichtung (12) nach einem der Ansprüche 1 bis 5, **dadurch gekennzeichnet, dass** die Rodungswalze (28) etwa 12 cm tief im Boden (26) rotiert.

7. Fahrbare und an einem Fahrzeug (10) anbringbare Vorrichtung (12) nach einem der Ansprüche 1 bis 6, **dadurch gekennzeichnet, dass** die Vorrichtung (12) und/oder das Fahrzeug (10), allein oder in Verbindung miteinander, Mittel (34) zum Niederdrücken der Hölzer (14) umfassen, welche beim Verfahren der Vorrichtung (12) die im wesentlichen senkrecht wachsenden Hölzer (14) in eine im wesentlichen waagerechte Position am Boden (26) drücken, wobei die Wurzeln (30) der Hölzer teilweise aus dem Boden (26) hervortreten.

8. Fahrbare und an einem Fahrzeug (10) anbringbare Vorrichtung (12) nach Anspruch 7, **dadurch gekennzeichnet, dass** das Mittel (34) ein hydraulisch bewegbarer Trägerarm (36) ist, an dessen in Fahrtrichtung (50) vorderem Ende eine Niederdrückrolle (38) angeordnet ist.

9. Fahrbare und an einem Fahrzeug (10) anbringbare Vorrichtung (12) nach einem der Ansprüche 1 bis 8, **dadurch gekennzeichnet, dass** die Einzugswalzen (22, 24; 60, 62) radial nach außen gerichtete Stacheln (40) aufweisen.

10. Fahrbare und an einem Fahrzeug (10) anbringbare Vorrichtung (12) nach einem der Ansprüche 1 bis 9, **dadurch gekennzeichnet, dass** die eine Einzugswalze (22; 60) ortsfest angeordnet ist, und dass die andere Einzugswalze (24; 62) entgegen einer auf die ortsfest angeordnete Einzugswalze (22; 60) gerichteten Kraft derart schwenkbar angeordnet ist, dass die Breite des durch die beiden Einzugswalzen (22, 24) gebildeten Spaltes (20) veränderbar ist, und die erfassten Hölzer (14) zwischen den beiden Einzugswalzen (22, 24; 60, 62) einklemmbar sind.

11. Fahrbare und an einem Fahrzeug (10) anbringbare Vorrichtung (12) nach Anspruch 10, **dadurch gekennzeichnet, dass** die schwenkbare Einzugswalze (24; 62) hydraulisch bewegbar ist.

12. Fahrbare und an einem Fahrzeug (10) anbringbare Vorrichtung (12) nach einem der Ansprüche 1 bis 11, **dadurch gekennzeichnet, dass** die Drehrichtung (52) der angetriebenen Einzugswalzen (22, 24; 60, 62) umkehrbar ist.

13. Fahrbare und an einem Fahrzeug (10) anbringbare Vorrichtung (12) nach einem der Ansprüche 1 bis 12, **dadurch gekennzeichnet, dass** die Zuführvorrichtung (18) wenigstens eine, vorzugsweise drei angetriebene, quer zur Fahrtrichtung (50) angeordnete Förderwalzen (42, 44, 46) zum Fördern der durch die Rodungswalze (28) aus dem Boden (26) gehobenen und durch die Einzugswalzen (22, 24; 60; 62) in Richtung des Schneidwerks gedrückten Hölzer (14) samt Wurzeln (30) umfasst, wobei die Förderwalzen (42, 44, 46) in Fahrtrichtung (50) hinter der Rodungswalze (28) angeordnet sind.

14. Fahrbare und an einem Fahrzeug (10) anbringbare Vorrichtung (12) nach Anspruch 13, **dadurch gekennzeichnet, dass** die Förderwalzen (42, 44, 46) derart angeordnet sind, dass die Hölzer (14), wenn sie von der Rodungswalze (28) an der Wurzel (30) erfasst werden, direkt auf die Förderwalzen (42, 44, 46) übergeben und zum Schneidwerkzeug transportiert werden.

15. Fahrbare und an einem Fahrzeug (10) anbringbare Vorrichtung (12) nach Anspruch 14, **dadurch gekennzeichnet, dass** die Förderwalzen (42, 44, 46) stufenförmig angeordnet sind, beginnend am Boden (26) in nächster Nähe zur Rodungswalze (28) und endend am Schneidwerkzeug.

16. Fahrbare und an einem Fahrzeug (10) anbringbare Vorrichtung (12) nach einem der Ansprüche 13 bis 15, **dadurch gekennzeichnet, dass** wenigstens zwischen zwei der quer in Fahrtrichtung (50) angeordneten Walzen (28, 42, 44, 46) eine Aussparung (48) vorgesehen ist.

17. Fahrbare und an einem Fahrzeug (10) anbringbare Vorrichtung (12) nach einem der Ansprüche 1 bis 16, **dadurch gekennzeichnet, dass** die Vorrichtung (12) selbstfahrend oder durch ein Fahrzeug (10) bewegbar ist.

18. Fahrbare und an einem Fahrzeug (10) anbringbare Vorrichtung (12) nach einem der Ansprüche 1 bis 17, **dadurch gekennzeichnet, dass** die vom Auswerfer (16) kommenden, zerkleinerten Hölzer (14) zusammen mit ihren Wurzeln (30) in einem Behälter zur Weiterverwendung überführbar sind.

## Claims

1. A travelling device (12), which can be preferably mounted on a vehicle (10), provided for completely removing and reducing the size of trees (14), particularly fruit trees, which are growing in a row, comprising a cutting tool for reducing the size of the trees (14) fed thereto, an ejector (16), which is mounted on the cutting tool and provided for ejecting the trees (14) cut in the cutting tool, and a feed device (18) that, in a direction of travel (50), is located in front of the cutting tool and provided for feeding the trees (14) to be cut in the cutting tool, wherein the feed device (18) comprises two driven, vertical draw-in rollers (22, 24; 60, 62) located close to the ground and forming a gap (20) **characterised in that** the rollers (22, 24; 60, 62), when operating the device (12), seize trees (14) which have previously been pressed down in the direction of travel (50), squeeze them inside the gap (20) and push them towards the cutting tool, and that the feed device (18) comprises at least one driven clearing roller (28) located in the ground (26) transverse to the direction of travel (50), which, when operating the device (12), seizes roots (30) of the pressed-down trees (14) located in the ground (14) and pushes them upward so that they can be fed to the cutting tool.

2. The travelling device (12) which can be mounted on a vehicle (10) according to claim 1, **characterised in that** the draw-in rollers (22, 24) are constructed as cylindrical and are arranged parallel to one another and form a gap (20) of constant width.

3. The travelling device (12) which can be mounted on a vehicle (10) according to claim 1, **characterised in that** the draw-in rollers (60, 62) are constructed as conical, that the longitudinal axes of the draw-in rollers (60, 62) are arranged parallel to one another and that the conical draw-in rollers (60, 62) form a gap (64) whose width at the lower end is greater than that at the upper end.

4. The travelling device (12) which can be mounted on a vehicle (10) according to any one of claims 1 to 3, **characterised in that** the clearing roller (28) is arranged in the direction of travel (50) behind the draw-in rollers (22, 24).

5. The travelling device (12) which can be mounted on a vehicle (10) according to any one of claims 1 to 4, **characterised in that** the clearing roller (28) has radially outwardly directed spikes (32).

6. The travelling device (12) which can be mounted on a vehicle (10) according to any one of claims 1 to 5, **characterised in that** the clearing roller (28) rotates at a depth of approximately 12 cm in the ground (26).

7. The travelling device (12) which can be mounted on a vehicle (10) according to any one of claims 1 to 6, **characterised in that** the device (12) and/or the vehicle (10), alone or connected one to the other, comprise means (34) for pressing down the trees (14) which, when the device (12) is operating, push the substantially vertically growing trees (14) into a substantially horizontal position on the ground (26), wherein the roots (30) of the trees partly protrude from the ground (26).

8. The travelling device (12) which can be mounted on a vehicle (10) according to claim 7, **characterised in that** the means (34) is a hydraulically movable jib arm (36) on whose front end in the direction of travel (50) there is located a pressing-down roller (38).

9. The travelling device (12) which can be mounted on a vehicle (10) according to any one of claims 1 to 8, **characterised in that** the draw-in rollers (22, 24; 60, 62) have radially outwardly directed spikes (40).

10. The travelling device (12) which can be mounted on a vehicle (10) according to any one of claims 1 to 9, **characterised in that** the draw-in rollers (22; 60) are arranged positionally fixed and that the other draw-in rollers (24; 62) are arranged such that they can be swivelled against a force directed onto the positionally fixed draw-in rollers (22; 60), that the width of the gap (20) formed by the two draw-in rollers (22, 24) is variable and the seized trees (14) are clampable between the two draw-in rollers (22, 24; 60, 62).

11. The travelling device (12) which can be mounted on a vehicle (10) according to claim 10, **characterised in that** the swivellable draw-in rollers (24; 62) are hydraulically movable.

12. The travelling device (12) which can be mounted on a vehicle (10) according to any one of claims 1 to 11, **characterised in that** the direction of rotation (52) of the driven draw-in rollers (22, 24; 60, 62) is reversible.

13. The travelling device (12) which can be mounted on a vehicle (10) according to any one of claims 1 to 12, **characterised in that** the feed device (18) comprises at least one, preferably three, conveying rollers (42, 44, 46) arranged transverse to the direction of travel (50) for conveying the trees (14) together with roots (30), which have been lifted from the ground (26) by the clearing roller (28) and pushed towards the cutting tool by the draw-in rollers (22, 24; 60; 62), wherein the conveying rollers (42, 44, 46) are arranged in the direction of travel (50) behind the clearing roller (28).

14. The travelling device (12) which can be mounted on a vehicle (10) according to claim 13, **characterised in that** the conveying rollers (42, 44, 26) are arranged such that the trees (14), when these are seized by the clearing roller (28) at the root (30), are transferred directly onto the conveying rollers (42, 44, 26) and transported to the cutting tool.

15. The travelling device (12) which can be mounted on a vehicle (10) according to claim 14, **characterised in that** the conveying rollers (42, 44, 26) are arranged in a step-shaped fashion, beginning at the ground (26) closest to the clearing roller (28) and ending at the cutting tool.

16. The travelling device (12) which can be mounted on a vehicle (10) according to any one of claims 13 to 15, **characterised in that** at least between two of the rollers (28, 42, 44, 46) arranged transversely in the direction of travel (50) there is provided a recess (48).

17. The travelling device (12) which can be mounted on a vehicle (10) according to any one of claims 1 to 16, **characterised in that** the device (12) is selfpropelling or movable by a vehicle (10).

18. The travelling device (12) which can be mounted on a vehicle (10) according to any one of claims 1 to 17, **characterised in that** the cut trees (14) coming from the ejector (16) together with their roots (30) can be transferred to a container for further use.

## Revendications

1. Dispositif mobile (12), pouvant, de préférence, être monté sur un véhicule (10) et servant à enlever complètement et à réduire en morceaux des bois (14) poussant en rang, en particulier des arbres fruitiers, avec un outil de coupe servant à réduire en morceaux les bois (14) amenés, un éjecteur (16), disposé sur l'outil de coupe et servant à éjecter les bois (14) réduits en morceaux dans l'outil de coupe et un dispositif d'amenée (18) disposé, dans le sens du déplacement, à l'avant du dispositif de coupe et servant à amener les bois (14) à réduire en morceaux à l'outil de coupe, le dispositif d'amenée (18) comportant deux rouleaux d'alimentation entraînés (22, 24 ; 60, 62), qui sont disposés verticalement et à proximité du sol et qui forment une fente (20), **caractérisé en ce que** pendant le déplacement du dispositif (12), les rouleaux d'alimentation (22, 24 ; 60, 62) saisissent les bois (14) qui ont été précédemment pressés par terre dans le sens du déplacement (50), serrent ceux-ci dans la fente (20) et les pressent en direction de l'outil de coupe et **en ce que** le dispositif d'amenée (18) comporte au moins un rouleau de dessouchage entraîné (28), qui est disposé dans le sol (26) transversalement à la direction de déplacement (50), et qui saisit les racines (30) se trouvant dans le sol (26) des bois (14) pressés vers le bas pendant le déplacement du dispositif (12) et les presses vers le haut de sorte qu'elles puissent être amenées vers l'outil de coupe.

2. Dispositif mobile (12) pouvant, de préférence, être monté sur un véhicule (10) suivant la revendication 1, **caractérisé en ce que** les rouleaux d'alimentation (22, 24) sont conçus cylindriques et parallèles l'un par rapport à l'autre.

3. Dispositif mobile (12) pouvant, de préférence, être monté sur un véhicule (10) suivant la revendication 1, **caractérisé en ce que** les rouleaux d'alimentation (60, 62) sont conçus en forme de cône, que les axes longitudinaux des rouleaux d'alimentation (60, 62) sont disposés parallèles l'un par rapport à l'autre et **en ce que** les rouleaux d'alimentation en forme de cône (60, 62) forment une fente (64), dont la largeur est plus grande à l'extrémité inférieure qu'à l'extrémité supérieure.

4. Dispositif mobile (12) pouvant, de préférence, être monté sur un véhicule (10) suivant une des revendications 1 à 3, **caractérisé en ce que** le rouleau de dessouchage (28) est, dans le sens du déplacement (50), disposé derrière les rouleaux d'alimentation (22, 24).

5. Dispositif mobile (12) pouvant, de préférence, être monté sur un véhicule (10) suivant une des revendications 1 à 4, **caractérisé en ce que** le rouleau de dessouchage (28) présente des pointes (32) dirigées radialement vers l'extérieur.

6. Dispositif mobile (12) pouvant, de préférence, être monté sur un véhicule (10) suivant une des revendications 1 à 5, **caractérisé en ce que** le rouleau de dessouchage (28) tourne dans le sol jusqu'à une profondeur de 12 cm à peu près.

7. Dispositif mobile (12) pouvant, de préférence, être monté sur un véhicule (10) suivant une des revendications 1 à 6, **caractérisé en ce que** le dispositif (12) et/ou le véhicule (10) comportent individuellement ou en combinaison l'un avec l'autre des moyens (34) servant à presser vers le bas, pendant le déplacement du dispositif (12), les bois (14) poussant essentiellement perpendiculairement, de manière que ceux-ci se trouvent dans une position essentiellement horizontale sur le sol (26), leurs racines (30) ressortant partiellement du sol (26).

8. Dispositif mobile (12) pouvant, de préférence, être monté sur un véhicule (10) suivant la revendication 7, **caractérisé en ce que** le moyen (34) est un bras porteur (36) pouvant être actionné hydrauliquement, à l'extrémité se trouvant à l'avant dans le sens du déplacement duquel est disposé un rouleau de pression vers le bas (38).

9. Dispositif mobile (12) pouvant, de préférence, être monté sur un véhicule (10) suivant une des revendications 1 à 8, **caractérisé en ce que** les rouleaux d'alimentation (22, 24 ; 60, 62) présentent des pointes (40) dirigées radialement vers l'extérieur.

10. Dispositif mobile (12) pouvant, de préférence, être monté sur un véhicule (10), suivant une des revendications 1 à 9, **caractérisé en ce qu'**un rouleau d'alimentation (22, 60) est disposé stationnaire et que l'autre rouleau d'alimentation (24, 62) est disposé orientable contre une force dirigée sur le rouleau d'alimentation (22, 60) disposé stationnaire de manière que la largeur de la fente (20) formée par les deux rouleaux d'alimentation (22, 24), soit modifiable et que les bois (14) saisis puissent être serrés entre les deux rouleaux d'alimentation (22, 24, 60, 62).

11. Dispositif mobile (12) pouvant, de préférence, être monté sur un véhicule (10) suivant la revendication 10, **caractérisé en ce que** le rouleau d'alimentation orientable (24 ; 62) peut être actionné hydrauliquement.

12. Dispositif mobile (12) pouvant, de préférence, être monté sur un véhicule (10) suivant une des revendications 1 à 11, **caractérisé en ce que** le sens de rotation (52) des rouleaux d'alimentation entraînés (22, 24 ; 60, 62) peut être inversé.

13. Dispositif mobile (12) pouvant, de préférence, être monté sur un véhicule (10) suivant une des revendications 1 à 12, **caractérisé en ce que** le dispositif d'amenée (18) comprend au moins un, de préférence trois rouleaux transporteurs entraînés (42, 44, 46), disposés transversalement au sens de déplacement (50), pour transporter les bois (14) extraits du sol (26), y compris les racines (30), par le rouleau de dessouchage (28) et pressés par les rouleaux d'alimentation (22, 24 ; 60 ; 62) en direction du dispositif de coupe, les rouleaux transporteurs (42, 44, 46) étant disposés, dans le sens de déplacement, derrière le rouleau de dessouchage (28).

14. Dispositif mobile (12) pouvant, de préférence, être monté sur un véhicule (10) suivant la revendication 13, **caractérisé en ce que** les rouleaux transporteurs (42, 44, 46) sont disposés de manière que les bois (14) saisis aux racines par le dispositif de dessouchage (28) soient directement transmis aux rouleaux transporteurs (42, 44, 46) et transportés à l'outil de coupe.

15. Dispositif mobile (12) pouvant, de préférence, être monté sur un véhicule (10) suivant la revendication 14, **caractérisé en ce que** les rouleaux transporteurs (42, 44, 46) sont disposés en échelons qui commencent au sol (26), à proximité immédiate du rouleau de dessouchage (28), et qui se terminent à l'outil de coupe.

16. Dispositif mobile (12) pouvant, de préférence, être monté sur un véhicule (10) suivant une des revendications 13 à 15, **caractérisé en ce qu'**un dégagement (48) est prévu au moins entre deux des rouleaux (28, 42, 44, 46) disposés transversalement à la direction de déplacement (50).

17. Dispositif mobile (12) pouvant, de préférence, être monté sur un véhicule (10) suivant une des revendications 1 à 16, **caractérisé en ce que** le dispositif (12) est automobile ou déplaçable au moyen d'un véhicule.

18. Dispositif mobile (12) pouvant, de préférence, être monté sur un véhicule (10) suivant une des revendications 1 à 17, **caractérisé en ce que** les bois (14) réduits en morceaux provenant de l'éjecteur (16) peuvent être, avec leurs racines (30), transférés à l'intérieur d'un récipient à une utilisation ultérieure.
